**Europäisches Patentamt**

(19) **European Patent Office**

**Office européen des brevets**

(11) Numéro de publication: **0 050 054**
**B1**

(12) **FASCICULE DE BREVET EUROPEEN**

(45) Date de publication du fascicule du brevet:
**22.08.84**

(51) Int. Cl.³: **B 01 D 53/26,** F 24 F 13/00

(21) Numéro de dépôt: **81401398.3**

(22) Date de dépôt: **08.09.81**

(54) **Dispositif destiné à recevoir et supporter un sachet perforé contenant un produit hydrophile pour combattre l'humidité d'un local.**

(30) Priorité: **30.09.80 FR 8020910**

(43) Date de publication de la demande:
**21.04.82 Bulletin 82/16**

(45) Mention de la délivrance du brevet:
**22.08.84 Bulletin 84/34**

(84) Etats contractants désignés:
**AT BE CH DE GB IT LI LU NL SE**

(56) Documents cités:
**WO - A - 81/01995**
**FR - A - 2 234 029**
**GB - A - 1 161 772**
**US - A - 2 341 893**
**US - A - 2 624 420**
**US - A - 3 248 862**

(73) Titulaire: **RUBSON S.A.F. Société Anonyme, 7 & 9 rue Lionel-Terray, F-92502 Rueil Malmaison (FR)**

(72) Inventeur: **Dumas, Jean Alexandre, 2 Avenue Joséphine, F-92505 Rueil Malmaison (FR)**
Inventeur: **Naudin, Hildebert, 29ter Parc de Montretout, F-92210 Saint Cloud (FR)**

(74) Mandataire: **Lemonnier, André et al, Cabinet LEMONNIER 4, Boulevard Saint-Denis, F-75010 Paris (FR)**

## Description

On connaît des produits se présentant sous la forme solide de cristaux ou de morceaux, par exemple le chlorure de calcium, qui absorbent l'humidité de l'air et se liquéfient. Il faut éviter que le produit liquéfié séjourne à la surface des cristaux ou des morceaux car il isole ceux-ci de l'air à déshydrater.

La mise en oeuvre de ces produits nécessite donc un dispositif capable de supporter le produit en autorisant le libre accès de l'atmosphère ambiante à la masse du produit et l'écoulement du sel liquéfié.

FR-A-2 234 029 décrit des dispositifs qui tentent de répondre à ces désidérata mais les différents dispositifs proposés sont basés sur un récipient de grandes dimensions dans lequel est introduit un récipient perforé contenant le produit ou dans lequel est suspendu un sachet perforé rempli en le produit. Dans ces dispositifs, la circulation naturelle de l'air autour de la masse du produit se fait très mal, la masse du produit étant entourée par la paroi du récipient, et ce dernier doit avoir un très grand volume pour que le niveau du liquide n'atteigne pas le récipient ou le sachet. Le dispositif est donc peu efficace et encombrant.

US-A-2 341 893 décrit un dispositif analogue qui présente divers inconvénients et notamment celui d'un très mauvais contact entre l'air ambiant et la masse du produit hydrophile.

La présente invention a pour but de réaliser un dispositif de ce genre qui soit simple, bon marché et conditionnable sous un faible volume avec le produit lui-même, lequel est normalement conditionné dans un sachet perforé de forme oblongue, ce sachet étant lui-même enfermé pour le stockage et l'expédition dans un sac étanche. L'invention vise également à supporter ce sachet de manière à ce qu'il soit dégagé du réceptacle destiné à recueillir le produit liquéfié. En outre le produit liquéfié présente une tension de surface assez importante et peut présenter un certain pouvoir corrosif. Il est donc important qu'il ne puisse s'écouler par capillarité hors du récipient, ce qui risquerait de se produire dans le cas du sachet perforé posé sur une grille prenant appuis sur les bords du récipient, le produit liquéfié pouvant s'étaler le long des barres de la grille pour s'écouler à l'extérieur du récipient.

Le dispositif conforme à l'invention destiné à recevoir et supporter un sachet perforé de forme oblongue contenant un produit hydrophile pour combattre l'humidité d'un local, comportant un bac destiné à recevoir le produit hydrophile liquéfié et un support pour supporter au-dessus du bac le sachet contenant le produit hydrophile est caractérisé en ce que le support est constitué par un chevalet adaptable dans le bac et susceptible de soutenir le sachet perforé contenant le produit hydrophile sensiblement au-dessus du bord supérieur du bac avec sa grande dimension horizontale.

Selon un mode de réalisation préférentiel, le chevalet est constitué par deux plaques en forme de peignes emboîtables par leurs espaces entre dents pour former le chevalet, les côtés longitudinaux des bases des peignes pouvant être engagés dans le bac, en appui sur le fond du bac et en butée contre deux saillies longitudinales solidaires dudit fond (en général les deux parois latérales opposées) pour limiter mécaniquement l'ouverture du chevalet entre les dents duquel est placé le sac de produit hydrophile.

La forme en chevalet avec des dents disposées alternativement de part et d'autre du sachet assure un bon support du sachet perforé, un bon accès de l'air ambiant aux perforations du sachet en passant au-dessus du bord du récipient et un bon écoulement du sel liquéfié dans le bac qui, outre son rôle de bac récepteur, constitue un limiteur mécanique de l'écartement du chevalet. En outre le liquide qui s'écoule sur les surfaces du chevalet ne peut diffuser à l'extérieur du bac.

De préférence les plaques constitutives du chevalet ont une largeur légèrement inférieure à la largeur de la partie supérieure du bac de matière que ces plaques puissent s'adapter à l'état démonté dans la partie supérieure du bac lequel a un volume lui permettant de recevoir le sac de produit hydrophile et le volume du produit hydrophile liquéfié.

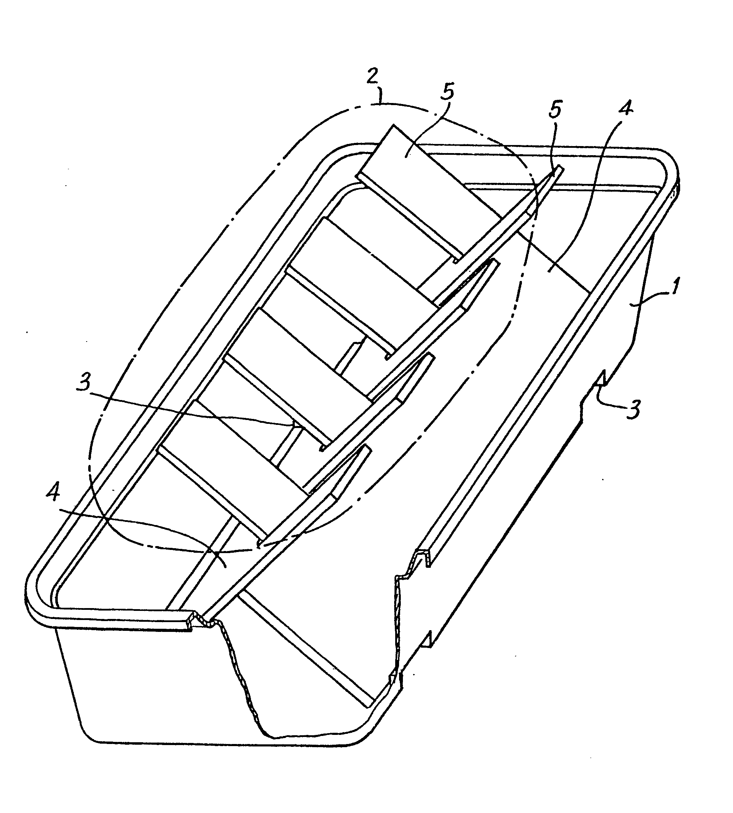

La présente invention sera décrite plus en détail ci-après avec référence au dessin ci-annexé qui représente une vue en perspective avec arrachement partiel du dispositif, le sachet de produit étant représenté en traits mixtes.

Le dispositif comporte un bac rectangulaire 1 par exemple en une feuille de plastique rigide formée par formage sous vide ou analogue. Les dimensions pratiques de ce bac sont environ une longueur de 35 cm, une largeur de 15 cm et une profondeur de 8 cm soit un volume de 4200 cm$^3$ pour une charge de chlorure de calcium à l'état sec d'environ 1 kg contenue dans le sachet perforé (2). Le bac présente de préférence des saillies longitudinales 3 destinées à former butées pour limiter l'ouverture du chevalet.

Le chevalet est constitué par deux plaques 4 réalisées en un matériau suffisamment rigide ou rigidifié par des nervures. Ces plaques qui, avec le bac ci-dessus, présentent par exemple une longueur de 30 cm et une largeur de l'ordre de 15 cm sont entaillées le long d'un de leurs bords pour former des dents 5 dont la largeur est légèrement inférieure à la largeur d'une entaille et dont la longueur est de l'ordre de 7 cm.

Le dispositif est monté comme cela ressort nettement du dessin en assemblant les deux plaques 4 par engagement des dents de l'une dans les entailles de l'autre et en plaçant le chevalet dans le bac 1 avec le bord inférieur des plaques en appui sur le fond et en butée contre les saillies 3. Le sachet perforé 2 contenant le chlorure de calcium ou analogue en morceau est placé sur les dents du chevalet.

## Revendications

1. Dispositif destiné à recevoir et supporter un sachet perforé (2) de forme oblongue contenant un produit hydrophile pour combattre l'humidité d'un local comportant un bac (1) destiné à recevoir le produit hydrophile liquéfié et un support pour supporter au-dessus du bac le sachet contenant le produit hydrophile, caractérisé en ce que le support est constitué par un chevalet (4) adaptable dans le bac et susceptible de soutenir le sachet perforé (2) contenant le produit hydrophile sensiblement au-dessus du bord supérieur du bac, la plus grande dimension du sachet étant horizontale.

2. Dispositif selon la revendication 1, caractérisé en ce que le chevalet (4) est constitué par deux plaques en forme de peignes emboîtables par leurs espaces entre dents (5) pour former le chevalet, les côtés longitudinaux des bases des peignes pouvant être engagés dans le bac en appui sur le fond du bac et en butée contre deux saillies longitudinales (3) solidaires dudit fond (en général les deux parois latérales opposées) pour limiter mécaniquement l'ouverture du chevalet entre les dents (5) duquel est placé le sachet de produit hydrophile.

3. Dispositif selon l'une quelconque des revendications 1 et 2, caractérisé en ce que les plaques constitutives du chevalet ont une largeur légèrement inférieure à la largeur de la partie supérieure du bac de manière que ces plaques puissent s'adapter à l'état démonté dans la partie supérieure du bac (1) lequel a un volume lui permettant de recevoir le sac de produit hydrophile et le volume du produit hydrophile liquéfié.

**Patentansprüche**

1. Vorrichtung, die für die Aufnahme und Halterung eines perforierten Beutels (2) von länglicher Form bestimmt ist, der ein hydrophiles Produkt zum Bekämpfen der Feuchtigkeit in einem Raum enthält, bestehend aus einem Behälter (1), der für die Aufnahme des verflüssigten hydrophilen Produktes bestimmt ist, und aus einem Träger zur Halterung des Beutels, der das hydrophile Produkt enthält, über dem Behälter, dadurch gekennzeichnet, dass der Träger aus einem Gestell (4) gebildet wird, das in den Behälter einsetzbar ist und geeignet ist, den perforierten Beutel (2), der das hydrophile Produkt enthält, wesentlich über dem Rand des Behälters zu haltern, wobei die grösste Ausdehnung des Beutels die horizontale ist.

2. Vorrichtung gemäss dem Anspruch 1, dadurch gekennzeichnet, dass das Gestell (4) aus zwei kammförmigen Platten gebildet ist, die durch ihre Zwischenräume zwischen den Zähnen (5) ineinanderfügbar sind, um das Gestell zu bilden, wobei die Längsseiten der Kammsockel in den Behälter eingesetzt werden können, indem sie am Boden des Behälters und im Anschlag gegen zwei Längsvorsprünge (3) anliegen, die mit besagtem Boden fest verbunden sind (im allgemeinen die zwei einander gegenüberliegenden Seitenlängswände), um so mechanisch die Öffnung des Gestells zu begrenzen, zwischen dessen Zähnen (5) der Beutel mit dem hydrophilen Produkt angeordnet ist.

3. Vorrichtung gemäss einem der Ansprüche 1 und 2, dadurch gekennzeichnet, dass die das Gestell bildenden Platten eine Breite aufweisen, die um ein weniges geringer als die Breite des oberen Bereichs des Behälters (1) ist, derart, dass die Platten im abgebauten Zustand in den oberen Bereich des Behälters (1) einfügbar sind, welcher ein Volumen aufweist, das ihm erlaubt, den Beutel mit dem hydrophilen Produkt und das Volumen des verflüssigten hydrophilen Produkts aufzunehmen.

**Claims**

1. A device adapted for receiving and supporting a perforated bag (2) of oblong shape containing a hydrophilous product for fighting moisture in a room comprising a tank (1) intended to receive the liquefied hydrophilous product and a support for supporting above the tank the bag containing the hydrophilous product, characterized in that the support comprises an easel (4) adaptable in the tank and capable of supporting the perforated bag (2) containing the hydrophilous product substantially above the upper edge of the tank, the longer dimension of the bag being horizontal.

2. A device according to claim 1, characterized in that the easel (4) comprises two combshaped plates which can fit into each other via their in-between teeth spaces (5) for forming the easel, the longitudinal sides of the combbases being insertable into the tank to rest on the tank bottom and to abut against two longitudinal projections (3) integral with said bottom (as a rule the two opposite side walls) for mechanically limiting the opening of the easel between the teeth (5) of which is placed the bag of hydrophilous product.

3. A device according to either of claims 1 and 2, characterized in that the plates constituent of the easel have a width slightly lower than the width of the upper portion of the tank so that said plates may be accommodated in the disassembled state within the upper portion of the tank (1) which tank has a volume allowing it to receive the bag of hydrophilous product and the volume of liquefied hydrophilous product.